# EUROPÄISCHE PATENTSCHRIFT

(11) **EP 2 135 533 B1**
(45) Veröffentlichungstag und Bekanntmachung des Hinweises auf die Patenterteilung: **05.11.2014**
(21) Anmeldenummer: 09163071.5
(22) Anmeldetag: 18.06.2009
(51) Int. Cl.: A47J 31/06, A47J 31/36, A47J 31/54, A47J 31/56

(54) **Kaffeebrühverfahren sowie Kaffeemaschine**
Coffee brewing method and coffee machine
Procédé d'infusion de café et machine à café

(30) Priorität: 19.06.2008 DE 102008029222
(43) Veröffentlichungstag der Anmeldung: 23.12.2009
(73) Patentinhaber: WIK Far East Ltd., North Point, Hong Kong (CN)
(72) Erfinder: Meuer, Jens Martin, 47269 Duisburg (DE)
(74) Vertreter: Haverkamp, Jens

(56) Entgegenhaltungen:
- WO-A2-2008/038201
- DE-C1- 3 615 158
- DE-U1-202006 014 317

## Beschreibung

Die Erfindung betrifft ein Kaffeebrühverfahren, bei dem eine vorausgewählte Menge an gemahlenem Kaffee in einen Brühzylinder eingebracht und anschließend innerhalb des Brühzylinders durch Bewegen des Brühzylinders und/oder zumindest eines relativ zu dem Brühzylinder bewegbaren und innerhalb des Brühzylinders geführten Kolbens eine das eingebrachte Kaffeemehl enthaltende Brühkammer gebildet wird, bevor zum Durchführen des eigentlichen Brühvorganges durch eine Pumpe gefördertes Heißwasser durch die Brühkammer geleitet wird. Ferner betrifft die Erfindung eine Kaffeemaschine, die zum Durchführen dieses Verfahrens ausgebildet ist.

Kaffeevollautomaten, mit denen portionsweise Kaffee frisch gebrüht wird, arbeiten zum Brühen eines Kaffeegetränkes nach diesem Verfahren. Typischerweise lässt sich zum Bereiten unterschiedlicher Kaffeegetränke bei derartigen Kaffeemaschinen die Stärke des gewünschten Kaffeegetränkes und das Ausgabevolumen einstellen. Die Einstellung der Stärke des gewünschten Kaffeegetränkes hat Einfluss auf die in den Brühzylinder eingebrachte Kaffeemehlmenge. Bei der Einstellung zur Ausgabe eines stärkeren Kaffees wird in den Brühzylinder eine größere Kaffeemehlmenge eingebracht verglichen mit der Kaffeemehlmenge die zum Bereiten desselben Kaffeegetränkes in einer geringeren Stärke eingebracht wird. Diese Einstellung erfolgt in Abhängigkeit an den jeweiligen Geschmack desjenigen, von bzw. für den das Kaffeegetränk bereitet wird. Die Einstellung des Ausgabevolumens dient dagegen zur Einstellung der jeweils gewünschten Kaffeegetränkmenge. Die Zeitdauer, mit der die Pumpe zum Fördern von Heißwasser zum Zuführen desselben in den Brühkammerbetrieb wird.

Bei diesen vorbekannten Kaffeebrühverfahren bzw. bei den Verfahren zum Betreiben einer Kaffeemaschine, insbesondere eines so genannten Vollautomaten ist von Nachteil, dass eine Änderung des Ausgabeflüssigkeitsvolumens, also der Menge des aus der Brühkammer ausfließenden Kaffees dieses mit einer Änderung des Aromas des ausgegebenen Kaffees einhergeht. Begründet liegt dies darin, dass ausgehend von beispielsweise einer mittleren Kaffeemengenportion bei Änderungen der Einstellung auf eine größere Kaffeemengenportion dieselbe Kaffeemehlmenge in den Brühzylinder eingebracht wird und lediglich die Förderdauer des der Brühkammer zugeführten Heißwassers verlängert wird. Der gebrühte Kaffee kann somit einen "verwässerten" Geschmackseindruck hinterlassen. Grundsätzlich könnte versucht werden, dieser Problematik dadurch zu begegnen, gleichzeitig mit einer Erhöhung des gewünschten Kaffeeausgabevolumens die in den Brühzylinder eingebrachte Kaffeemehlmenge zu erhöhen. Gleichwohl gelingt es auch mit dieser Maßnahme nicht, ein Kaffeegetränk zu bereiten, dessen Aroma demjenigen entspricht, der mit einer geringeren Wassermenge und einer geringeren Kaffeemehlmenge gebrüht worden ist. Besonders deutlich machen sich die derartigen Geschmacksunterschiede bemerkbar, wenn ausgehend von einem mit geringer Menge gebrühten Espresso die Wasserfördermenge zum Bereiten beispielsweise eines doppelten Espresso zu erhöhen, selbst wenn mit der Erhöhung der geförderten Heißwassermenge auch entsprechend die in dem Brühzylinder eingebrachte Kaffeemehlmenge erhöht wird.

In DE 36 15 158 C1 wird ein Verfahren zur Zubereitung einer Mehrzahl von Kaffeegetränkportionen vorgeschlagen, wobei ein Verschiebungsweg eines Kolbens in einer Brühkammer bis zur Erreichung eines vorbestimmten Sollwerts des Anpressdrucks auf den Kaffeepulverkuchen in der Brühkammer gemessen wird und bei einer Abweichung des gemessenen Werts von einem vorgegebenen Sollwert die Menge des einzufüllenden Kaffeepulvers bei einem nachfolgenden Kaffeezubereitungs-Zyklus verändert wird. Hierdurch sollen Abweichungen der Menge des eingefüllten Kaffepulvers, die beispielsweise durch unterschiedliche Qualität der verwendeten Kaffeebohnen entstehen, korrigiert werden.

Gemäß WO 2007/038201 A2 wird ein Brühdruck in einer Zuführungsleitung des Brühwassers gemessen und das Volumen der Brühkammer derart verändert, dass durch Kompression des Kaffeepulvers und entsprechende Anpassung des Durchflusswiderstands des Heißwassers durch das kompaktierte Kaffepulver ein vorgegebener Brühdruck erreicht wird.

Ausgehend von diesem diskutierten Stand der Technik liegt der Erfindung daher die Aufgabe zugrunde, ein Kaffeebrühverfahren der eingangs genannten Art dergestalt weiterzubilden, dass auch bei unterschiedlichen Ausgabevolumina ein bezüglich seines Aromas gleiches Kaffeegetränk gebrüht werden kann.

Gelöst wird diese Aufgabe durch ein Verfahren gemäß Anspruch 1.

Bei diesem Kaffeebrühverfahren erfolgt eine Anpassung bei geändertem Ausgabevolumen nicht nur hinsichtlich der einzusetzenden Kaffeemehlmenge, sondern auch in Bezug auf weitere, auf das Aroma des bereiteten Kaffeegetränks offenbar Einfluss nehmende Faktoren. Somit ist es mit diesem Kaffeebrühverfahren möglich, trotz geändertem Ausgabevolumen die Kontaktzeit des für die Kaffeebereitung verwendeten Heißwassers mit dem in der Brühkammer befindlichen Kaffeemehl konstant zu lassen. Es hat sich gezeigt, dass in Abhängigkeit von der Kontaktzeit des Heißwassers mit dem Kaffeepulver unterschiedliche Aromen aus dem Kaffeemehl herausgelöst werden. Zum Gleichhalten der Heißwasserkontaktzeit mit dem Kaffeemehl bei unterschiedlichen Ausgabevolumina kann dadurch erreicht werden, dass die Größe der Brühkammer in Abhängigkeit von der zuvor in den Brühzylinder eingefüllten Kaffeemenge unterschiedlich eingestellt wird. Durch diese relative Änderung der Größe der Brühkammer in Bezug auf die eingefüllte Kaffeemehlmenge kann der Grad der Kaffeemehlverdichtung eingestellt werden. Wird ein größeres Ausgabevolumen gewünscht und wird demzufolge eine größere Kaffeemehlmenge in den Brühzylinder eingebracht, wird die Brühkammer relativ größer eingestellt, so dass durch das Kaffeemehl ein relativ geringerer dem zugeführten Heißwasser sich entgegenstellender Gegendruck aufbaut. Das durch die Brühkammer geförderte Heißwasser tritt dann mit einer höheren Fließgeschwindigkeit durch das Kaffeemehl hindurch; mithin ist trotz größerer geförderter Heißwassermenge die Kontaktzeit zwischen dem Heißwasser und dem Kaffeepulver nicht notwendigerweise länger. Erreicht werden kann das vorgenannte Ziel auch dadurch, dass in Abhängigkeit von dem Getränkewunsch, dem gewünschten Ausgabevolumen und der in die Brühkammer eingebrachten Kaffeemenge die Pumpenleistung gesteuert wird. Mit dieser Maßnahme wird einem "Verwässern" dadurch entgegengewirkt, dass bei einem gewünschten größeren Ausgabevolumen die Pumpe zum Fördern des Heißwassers in die Brühkammer mit einer höheren Leistung betrieben wird. Auf diese Weise kann innerhalb derselben Zeit, die die Pumpe zum Bereiten desselben Kaffeegetränks mit einem geringeren Ausgabevolumen die benötigte größere Heißwassermenge gefördert werden. Die beiden vorbeschriebenen Regelgrößen "Einstellung der Größe der Brühkammer" und "Ansteuern der Pumpenleistung" können je nach Ausgestaltung des Kaffeebrühverfahrens in Kombination miteinander oder es kann alleine die letztgenannte Regelgröße für das Kaffeebrühverfahren verwendet werden.

Die Bemessung der Größe der Brühkammer kann auf unterschiedliche Art und Weise erfolgen. Grundsätzlich ist dieses durch Erfassen der Bewegung zumindest eines der gegeneinander bewegten Elemente der Brüheinheit zum Ausbilden der Brühkammer möglich. Dieses erfolgt über Weg- und/oder Umdrehungssensoren. Grundsätzlich ist eine Wegerfassung auch über das Verfahren des so genannten "Ripple Counting" möglich. Kombiniert mit einer solchen Maßnahme oder auch unabhängig davon kann die Größe der Brühkammer auch in Abhängigkeit von dem sich durch das darin befindliche Kaffeemehl im Zuge seiner Verdichtung aufbauenden Gegendruckes erfolgen. Bei dieser Methode wird eine geringere, in den Brühzylinder und damit in die Brühkammer eingebrachte Kaffeemenge stärker verdichtet als eine größere Kaffeemehlmenge, wenn mit dieser dasselbe Kaffeegetränk wie mit der geringeren Kaffeemehlmenge jedoch mit einem größeren Ausgabevolumen gebrüht werden soll. Eine solche Brühkammergrößenbemessung kann durch Vorsehen unterschiedlicher Gegendruckschwellwerte erfolgen. Grundsätzlich ist es auch möglich, den Vorgang des Ausbildens der Brühkammer bei dem Verdichtungsvorgang bei ein und demselben Gegendruck zu ändern, wobei bei einer größeren Kaffeemenge und gleichem Kaffeegetränkwunsch anschließend das Volumen der Brühkammer durch Zurückfahren des oder der gegeneinander bewegten Elemente in entsprechendem Maße vergrößert wird. Eine solche Rückbewegung des oder der bewegten Elemente kann wiederum zeit- und/oder bewegungsgesteuert sein.

Besonders bevorzugt ist eine Ausgestaltung, bei der zum Gleichhalten des Aromas trotz unterschiedlicher Ausgabevolumina die Größe der Brühkammer entsprechend der eingefüllten Kaffeemehlmenge eingestellt und auch die Pumpenleistung gesteuert wird. Auf diese Weise ist es möglich, trotz unterschiedlicher Ausgabevolumina die Kontaktzeit des der Brühkammer zugeführten Heißwassers mit dem in der Brühkammer befindlichen Kaffeemehl gleich oder annähernd gleich zu lassen, mithin auch bei einem größeren Ausgabevolumen dasselbe Aroma des gebrühten Kaffeegetränks zu erzielen.

Die Implementierung der vorbeschriebenen weiteren Variablen in die Kaffeegetränkezubereitung ermöglicht das Bereiten einer Vielzahl unterschiedlicher Kaffeegetränke mit ein und demselben Kaffeevollautomaten. Somit ist es mit diesem Verfahren auch möglich, mit einem Vollautomaten einen Kaffee zu brühen, dessen Aroma demjenigen eines Filterkaffees entspricht. Zu diesem Zweck wird die Brühkammer entsprechend groß eingestellt, die Förderleistung der Pumpe entsprechend schwach angesteuert und dadurch die Kontaktzeit des Heißwassers mit dem Kaffeemehl wie bei einem Filterkaffee entsprechend lang vorgesehen.

Zum Durchführen des Verfahrens verfügt eine Kaffeemaschine über einen Mikroprozessor, der die Steuerung des Brühvorganges in Abhängigkeit von dem jeweiligen Getränkewunsch übernimmt. Typischerweise sind bestimmte Getränkewünsche standardisiert vorgegeben, beispielsweise in einem nicht flüchtigen Speicher abgelegt. Die zur Kompensation einer unterschiedlichen Ausgabemenge notwendigen Änderungen sind ebenfalls vorprogrammierte Routinen, so dass benutzerseitig eine Anpassung nicht vorgenommen werden muss.

In einer Weiterbildung ist vorgesehen, dass der Vorgang des Kaffeebrühens vollständig manuell durchgeführt wird, wobei die einzelnen Brühparameter aufgezeichnet und abgespeichert werden. Dieses ermöglicht das individuelle Programmieren von Brühvorgängen, die sodann neben den typischerweise standardmäßig vorprogrammierten Brühvorgängen abrufbar sind.

Nachfolgend ist die Erfindung anhand eines Ausführungsbeispiels unter Bezugnahme auf die beigefügten Figuren beschrieben. Es zeigen:
- **Fig. 1:**: einen Längsschnitt durch eine Brüheinheit für eine Kaffeemaschine, eingebunden in ein schematisiertes Blockschaltbild mit weiteren Komponenten zum Betreiben der Brüheinheit,
- **Fig. 2:**: einen Ausschnitt aus dem Längsschnitt der Brüheinheit der Figur 1 mit der gemäß einem ersten Getränkewunsch eingestellten Brühkammer und
- **Fig. 3:**: die Anordnung der Figur 2 zum Bereiten desselben Kaffeegetränks mit einem größeren Ausgabevolumen und der dementsprechend geänderten Brühkammergrößeneinstellung.

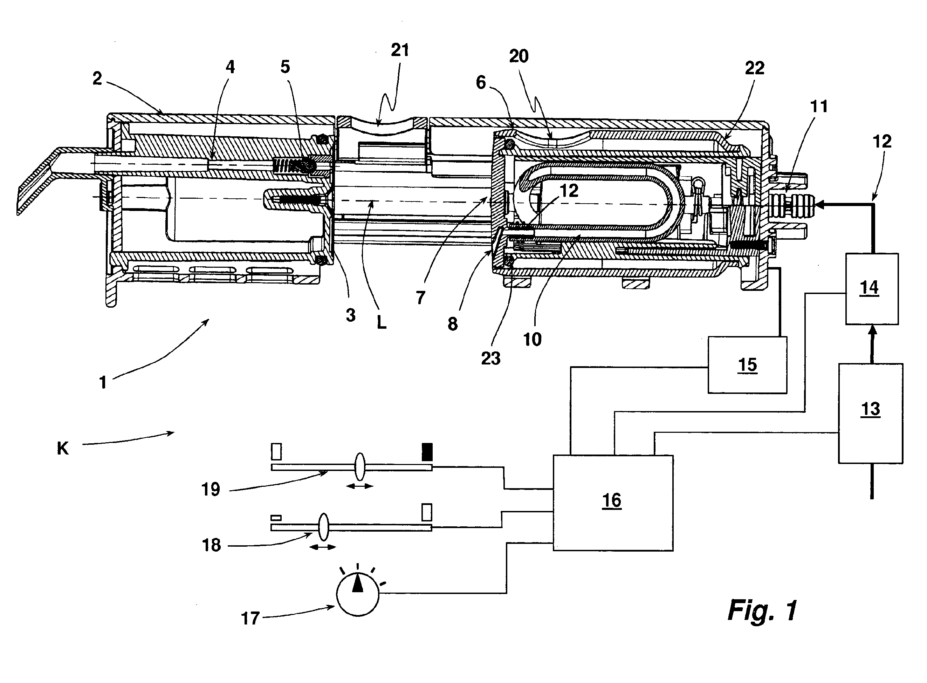

Eine Brüheinheit 1 für eine nur schematisiert hinsichtlich einiger Bestandteile bzw. Komponenten und ansonsten nicht näher dargestellte Kaffeemaschine K verfügt über ein Gestell 2. Das Gestell 2 ist nach Art eines Gehäuses ausgebildet. An das Gestell 2 angeschlossen ist ein feststehender Kolben 3 mit einer Kaffeeauslaufleitung 4. In die Kaffeeauslaufleitung 4 ist ein Crema-Ventil 5 eingeschaltet. Teil der Brüheinheit 1 ist des Weiteren ein Brühzylinder 6. Der Brühzylinder 6 ist durch einen Spindelantrieb in längsaxialer Richtung bewegbar angetrieben. Die Längsachse der Brüheinheit 1 bzw. seines Brühzylinders 6 ist in Figur 1 mit dem Bezugszeichen L gekennzeichnet. In dem Brühzylinder 6 ist ein beweglicher Kolben 7 angeordnet, der durch den Brühzylinder 6 ebenfalls in längsaxialer Richtung bewegbar ist. Figur 1 zeigt den Brühzylinder 6 und den bewegbaren Kolben 7 in ihrer Ausgangsstellung zu Beginn eines Brühzyklusses.

Der bewegliche Kolben 7 verfügt über einen Heißwasseraustritt 8, dessen Mündung zu dem feststehenden Kolben 3 weist. An die Rückseite des beweglichen Kolbens 7 ist ein Schlauchanschluss 9 angeformt. Auf diesem sitzt ein Schlauch 10 als flexible Leitung einer Heißwasserzuführung. Der Schlauch 10 ist mit seinem anderen Ende an ein gestellseitig gehaltenes Kupplungsstück 11, gegebenenfalls unter Zwischenschaltung weiterer Elemente, beispielsweise eines Einlassventils angeschlossen. Das Kupplungsstück 11 dient zum Anschließen der Heißwasserzuführung der Brüheinheit 1 an die Heißwasserversorgung der Kaffeemaschine K. Angeschlossen an das Kupplungsstück 11 der aus der Kaffeemaschine K in horizontaler Richtung herausnehmbaren Brüheinheit 1 ist eine Förderleitung 12, durch die mittels einer Pumpe 13 Heißwasser gefördert wird. In die Förderleitung 12 eingeschaltet ist ein Thermoblock 14 zum Erwärmen des von der Pumpe 13 geförderten Wassers. Die Pumpe 13 zieht in nicht näher dargestellter Art und Weise Wasser aus einem der Kaffeemaschine K zugeordneten Wasserbehälter ab.

Zum Antreiben des Spindeltriebes der Brüheinheit 1 und damit des Brühzylinders 6 dient ein Elektromotor 15. Dieser kann je nach Ausgestaltung der Brüheinheit entweder der Brüheinheit selbst oder der Kaffeemaschine zugehörig sein. Bei dem dargestellten Ausführungsbeispiel ist der Elektromotor 15 der Kaffeemaschine K zugehörig.

Zum Steuern des Brühzyklusses zum Bereiten eines Kaffeegetränkes verfügt die Kaffeemaschine K über eine, typischerweise als Mikroprozessor ausgebildete Steuereinheit 16. An die Steuereinheit 16 sind mehrere Bedienschalter 17, 18, 19 angeschlossen, wobei es sich bei dem dargestellten Ausführungsbeispiel um einen Getränkeauswahlschalter 17, einen Ausgabevolumenschalter 18 und einen Schalter 19 zum Einstellen der gewünschten Stärke des zu brühenden Kaffeegetränks handelt. Über die Steuereinheit 16 werden die zum Betreiben der Brüheinheit 1 notwendigen Aktoren - Motor 15, Pumpe 13, Thermoblock 14 - in Abhängigkeit von dem jeweiligen Getränkewunsch, der zu bereitenden Getränkemenge und der gewünschten Getränkestärke angesteuert. In Figur 1 sind nur diejenigen Aktoren der Kaffeemaschine K dargestellt und an die Steuereinheit 16 angeschlossen, soweit dieses für die Beschreibung der Erfindung erforderlich ist. Der Ablauf und die entsprechenden Ansteuerdaten für die unterschiedlichen Brühzyklen sind vorprogrammiert und aus einem in Figur 1 nicht dargestellten Speicher abgelegt und aus diesem von der Steuereinheit 16 abrufbar. Andere Aktoren, wie beispielsweise eine Dampfgenerierung, eine Milchaufschäumeinrichtung und dergleichen sind der Einfachheit halber nicht dargestellt.

Zum Brühen eines Kaffeegetränks wird der Brühzylinder 6 durch entsprechende Ansteuerung des Motors 15 in Richtung zu dem feststehenden Kolben 3 aus seiner in Figur 1 gezeigten Position heraus verfahren. Der Brühzylinder 6 wird soweit in diese Richtung bewegt, bis die Kaffeeeinlassöffnung 20 des Brühzylinders 6 mit einer gestellseitigen Kaffeedurchlassöffnung 21 fluchtet. In dieser Stellung von Brühzylinder 6 und Gestell 2 wird durch die dann fluchtenden Öffnungen 20, 21 Kaffeemehl in den Brühzylinder 6 eingebracht. In dieser Stellung greift der feststehende Kolben 3 bereits endseitig in den Brühzylinder 6 ein. Die eingefüllte Kaffeemehlmenge ist abhängig von dem jeweiligen Getränkewunsch, dem gewählten Ausgabevolumen und der gewünschten Getränkestärke. Ist das Kaffeemehl in die Brühkammer 6 eingebracht, wird der Brühzylinder 6 weiter in Richtung zu dem feststehenden Kolben 3 verfahren, so dass von diesem das in den Brühzylinder 6 eingebrachte Kaffeemehl in den hinteren Abschnitt des Brühzylinders 6 geschoben wird.

Der Brühzylinder 6 trägt an seinem hinteren Ende einen nach innen vorspringenden Flansch 22. Ist der Brühzylinder 6 entsprechend weit in Richtung zu dem feststehenden Kolben 3 bewegt worden, tritt der Flansch 22 in Kontakt mit einem an der Rückseite des beweglichen Kolbens 7 befindlichen Dichtring 23. Infolge der in längsaxialer Richtung beweglichen Lagerung des Kolbens 7 wird dieser bei einer weiteren Bewegung des Brühzylinders 6 in Richtung zum feststehenden Kolben 3 hin mitbewegt.

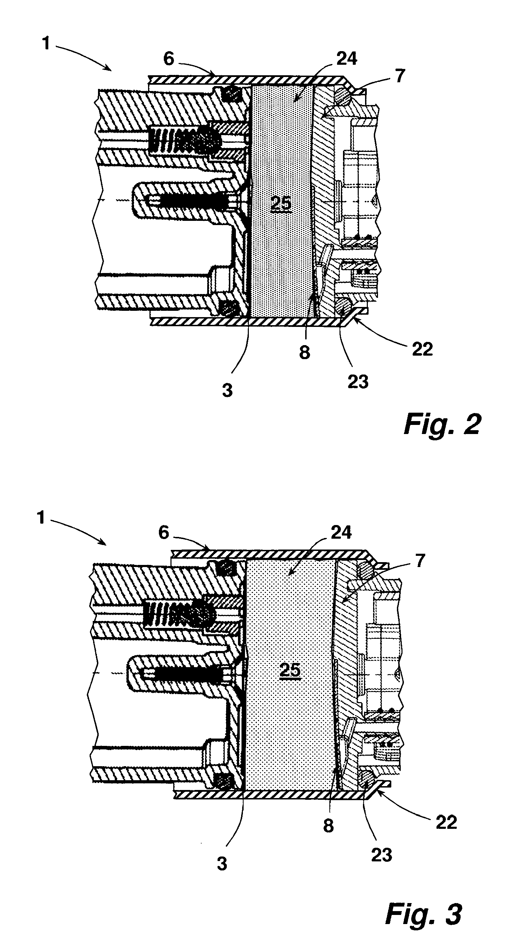

Figur 2 zeigt in einer vergrößerten Ausschnittsdarstellung die zwischen dem feststehenden Kolben 3 und dem beweglichen Kolben 7 innerhalb des Brühzylinders 6 durch diese Elemente gebildeten Brühkammer 24 mit dem darin enthaltenen komprimierten Kaffeemehl 25. Bei dem dargestellten Ausführungsbeispiel wird die Bewegung des Brühzylinders 6 zum Bewegen des beweglichen Kolbens 7 bei einem bestimmten, durch das komprimierte Kaffeemehl 25 bereitgestellten Gegendruck gestoppt. Anschließend werden die Pumpe 13 und der Thermoblock 14 angesteuert, um entsprechend dem Getränkewunsch die benötigte Heißwassermenge mit der entsprechenden Temperatur in die Brühkammer 24 einzuleiten. Die entsprechend dem Getränkewunsch notwendigen Ansteuerdaten hinsichtlich der Pumpenleistung, gegebenenfalls der Pumpentaktung und der Temperatur des der Brühkammer 24 zuzuführenden Heißwassers greift die Steuereinheit 16 auf die diesbezüglich vorprogrammierten Daten zurück.

Während in Figur 2 beispielhaft die Bereitung eines Kaffeegetränks mit einem kleineren Ausgabevolumen gezeigt ist, ist in Figur 3 die Brühkammer 24 mit einer Größe dargestellt, die diese einnimmt, wenn bei demselben Getränkewunsch und bei der gleichen Getränkestärke ein größeres Ausgabevolumen, beispielsweise die doppelte Ausgabemenge gewünscht wird. Erkennbar ist aus Figur 3, dass in die Brühkammer 24 eine größere Kaffeemehlmenge eingebracht worden ist. Zudem ist die Bewegung des Kolbens 7 in Richtung zu dem feststehenden Kolben 3 durch die Steuereinheit 16 bereits bei einem geringeren, von dem Kaffeemehl 25 bereitgestellten Gegendruck beendet worden. Folglich ist das in der Brühkammer 24 befindliche Kaffeemehl 25 geringer verdichtet. Zum Brühen dieses Kaffeegetränkes wird die Pumpe 13 mit einer höheren Leistung betrieben, damit die bei diesem Getränk benötigte größere Wassermenge in derselben Zeit durch die Brühkammer 24 strömt, wie die geringere Wassermenge des vorherigen Getränks. Dieses gewährleistet, dass die Kontaktzeit des in die Brühkammer 24 eingebrachten Heißwassers mit dem darin befindlichen Kaffeemehl gleich oder zumindest quasi gleich ist. Erreicht wird dieses bei diesem dargestellten Ausführungsbeispiel durch einen geringeren Verdichtungsgrad des Kaffeemehls und durch eine höhere Leistung der Pumpe 13.

Die Erfindung ist anhand eines Beispieles beschrieben worden. Für einen Fachmann ergeben sich unter Kenntnis dieser Beschreibungen zahlreiche weitere Ausgestaltungen, Einfluss auf den Brühvorgang von Kaffeegetränken zu nehmen. Daher ist der Schutzumfang nicht auf das beschriebene Ausführungsbeispiel beschränkt, sondern erstreckt sich auf eine Vielzahl weiterer Ausführungsbeispiele, die sich einem Fachmann aus der Kenntnis der Beschreibung der Erfindung unter Berücksichtigung der Ansprüche ergeben.

### Bezugszeichenliste

- 1: Brüheinheit
- 2: Gestell
- 3: Kolben
- 4: Kaffeeauslaufleitung
- 5: Crema-Ventil
- 6: Brühzylinder
- 7: Kolben
- 8: Heißwasseraustritt
- 9: Schlauchanschluss
- 10: Schlauch
- 11: Kupplungsstück
- 12: Förderleitung
- 13: Pumpe
- 14: Thermoblock
- 15: Elektromotor
- 16: Steuereinheit
- 17: Getränkeauswahlschalter
- 18: Ausgabevolumenschalter
- 19: Schalter
- 20: Kaffeeeinlassöffnung
- 21: Kaffeeeinlassöffnung
- 22: Flansch
- 23: Dichtring
- 24: Brühkammer
- 25: Kaffeemehl
- K: Kaffeemaschine
- L: Längsachse

## Patentansprüche

1. Kaffeebrühverfahren, bei dem eine vorausgewählte Menge an gemahlenem Kaffee in einen Brühzylinder (6) eingebracht und anschließend innerhalb des Brühzylinders (6) durch Bewegen des Brühzylinders (6) und/oder zumindest eines relativ zu dem Brühzylinder bewegbaren und innerhalb des Brühzylinders (6) geführten Kolbens (7) eine das eingebrachte Kaffeemehl (25) enthaltende Brühkammer (24) gebildet wird, bevor zum Durchführen des eigentlichen Brühvorganges durch eine Pumpe (13) gefördertes Heißwasser durch die Brühkammer (24) geleitet wird, **dadurch gekennzeichnet, dass** in Abhängigkeit von dem Getränkewunsch, dem gewünschten Flüssigkeitsvolumen des auszugebenden Kaffeegetränks und der in die Brühkammer (24) eingebrachten Kaffeemenge die Größe der Brühkammer (24) eingestellt und die Pumpenleistung zum Fördern des in die Brühkammer (24) zum Durchführen des Brühvorganges geleiteten Heißwassers gesteuert oder alleine die Pumpenleistung zum Fördern des in die Brühkammer (24) zum Durchführen des Brühvorganges geleiteten Heißwassers gesteuert wird.

2. Verfahren nach Anspruch 1, **dadurch gekennzeichnet, dass** zur Beibehaltung eines gleichen Aromas eines Kaffeegetränks bei unterschiedlichen Ausgabeflüssigkeitsvolumina bei einem höheren Ausgabevolumen eine größere Menge Kaffeepulver in die Brühkammer (24) eingebracht wird, das Volumen der Brühkammer (24), verglichen mit demjenigen bei Befüllung mit einer geringeren Kaffeemehlmenge relativ größer eingestellt und die Pumpenleistung zum Fördern einer größeren Heißwassermenge erhöht wird.

3. Verfahren nach Anspruch 1, **dadurch gekennzeichnet, dass** zum Einstellen der Größe der Brühkammer (24) der beim Ausbilden der Brühkammer (24) durch entsprechendes Bewegen der relativ zueinander beweglichen Elemente der Brüheinheit (1) der Kaffeemaschine (K) von dem in den Brühzylinder (6) eingebrachten und dem Zuge des Ausbildens der Brühkammer (24) gegebenenfalls verdichteten Kaffeemehl bereitgestellte Gegendruck als Maß verwendet wird.

4. Verfahren nach Anspruch 3, **dadurch gekennzeichnet, dass** zum Einstellen einer relativ größeren Größe der Brühkammer (24) bei Verwenden einer größeren, in den Brühzylinder (6) eingebrachten Kaffeemehlmenge ein geringerer von dem in der Brühkammer (24) befindlichen Kaffeemehl bereitgestellter Gegendruck als Maß für die relativ größere Brühkammer (24) verwendet wird.

5. Verfahren nach einem der Ansprüche 2 bis 4, **dadurch gekennzeichnet, dass** die Pumpenleistung in einem solchen Maße erhöht wird, dass das größere Flüssigkeitsvolumen in derselben Zeit gefördert wird, wie das geringere bei Ausgabe desselben Kaffeegetränks mit geringerem Volumen.

6. Kaffeemaschine mit einer Brüheinheit (1) mit einem innerhalb eines Brühzylinders (6) längsverschiebbar angeordneten und gegenüber einem Gestell (2) bewegbaren Kolben (7) mit einem Heißwasseraustritt (11) zum Zuführen von Heißwasser in eine durch den Brühzylinder (6), den bewegbaren Kolben (7) und einen weiteren Kolben (3) gebildeten Brühkammer (24), einem Antrieb (15) zum Bewegen wenigstens eines der beweglichen Elemente der Brüheinheit (1) sowie einer Pumpe (13) zum Fördern von in die Brühkammer (24) im Zuge eines Brühvorganges einzuleitenden Heißwassers, **dadurch gekennzeichnet, dass** die Größe der Brühkammer (24) in Abhängigkeit von dem Getränkewunsch, dem gewünschten Flüssigkeitsvolumen des auszugebenden Kaffeegetränks und der in die Brühkammer (24) eingebrachten Kaffeemenge einstellbar ist und die Pumpenleistung zum Fördern des in die Brühkammer (24) zum Durchführen des Brühvorganges zu leitenden Heißwassers ansteuerbar ist oder alleine die Pumpenleistung zum Fördern des in die Brühkammer (24) zum Durchführen des Brühvorganges zu leitenden Heißwassers ansteuerbar ist.

## Claims

1. Coffee brewing method, in which a pre-selected quantity of ground coffee is introduced into a brewing cylinder (6) and then inside the brewing cylinder (6) a brewing chamber (24) containing the introduced powdered coffee (25) is formed by moving the brewing cylinder (6) and / or at least a piston (7) which can be moved relative to the brewing cylinder and guided inside the brewing cylinder (6), before hot water moved by a pump (13) is fed through the brewing chamber (24) to carry out the actual brewing operation, **characterised in that** the size of the brewing chamber (24) is set depending on the drink request, the desired volume of fluid of the coffee drink to be dispensed and the quantity of coffee introduced into the brewing chamber (24), and the pump power for transporting the hot water routed into the brewing chamber (24) to carry out the brewing operation is controlled or solely the pump power for transporting the hot water routed into the brewing chamber (24) to carry out the brewing operation is controlled.

2. Method according to claim 1, **characterised in that**, to maintain the same flavour of a coffee drink where different fluid volumes are dispensed, where a larger volume is dispensed a larger quantity of powdered coffee is introduced into the brewing chamber (24), the volume of the brewing chamber (24), compared to that when filled with a smaller quantity of powdered coffee, is set relatively higher and the pump power is increased to supply a larger quantity of hot water.

3. Method according to claim 1, **characterised in that**, to set the size of the brewing chamber (24),the counter-pressure provided by the powdered coffee introduced into the brewing cylinder (6) and possibly compressed during the forming of the brewing chamber (24) when the brewing chamber (24) is formed by the corresponding movement of the elements of the brewing unit (1) of the coffee machine (K) which can move relative to each other, is used as a measure.

4. Method according to claim 3, **characterised in that**, to set a relatively larger size of the brewing chamber (24) when using a larger quantity of the powdered coffee introduced into the brewing cylinder (6), a smaller counter-pressure provided by the powdered coffee found in the brewing chamber (24) is used as a measure for the relatively larger brewing chamber (24).

5. Method according to any one of the claims 2 to 4,**characterised in that** the pump power is increased to such a degree that the larger volume of liquid is transported in the same time as the smaller one when the same coffee drink of a smaller volume is dispensed.

6. Coffee machine with a brewing unit (1) with a piston (7) arranged within a brewing cylinder (6) such that it can be shifted longitudinally and can move relative to a rack (2), wherein said piston has a hot-water outlet (11) for feeding hot water into a brewing chamber (24) formed by the brewing cylinder (6), the movable piston (7) and a further piston (3), a drive (15) for moving at least one of the movable elements of the brewing unit (1) and a pump (13) for transporting the hot water to be introduced into the brewing chamber (24) in the course of the brewing operation, **characterised in that** the size of the brewing chamber (24) can be set depending on the drink request, the desired volume of liquid of the coffee drink to be dispensed and the quantity of coffee introduced into the brewing chamber (24) and the pump power for supplying the hot water to be fed into the brewing chamber (24) for carrying out the brewing operation can be controlled or only the pump power for supplying the hot water to be fed into the brewing chamber (24) for carrying out the brewing operation can be controlled.

## Revendications

1. Procédé d'infusion de café lors duquel une quantité présélectionnée de café moulu est introduite dans un cylindre d'infusion (6) et une chambre d'infusion (24) contenant le café moulu (25) introduit est formée à l'intérieur du cylindre d'infusion (6) en déplaçant le cylindre d'infusion (6) et/ou au moins un piston (7) mobile par rapport au cylindre d'infusion (6) et guidé à l'intérieur du cylindre d'infusion (6), avant d'acheminer par une pompe (13) l'eau chaude à travers la chambre d'infusion (24) afin de réaliser le procédé d'infusion à proprement parler, **caractérisé en ce que**, en fonction de la boisson souhaitée, du volume de liquide souhaité pour la boisson à base de café distribuée, et de la quantité de café introduite dans la chambre d'infusion (24), la taille de la chambre d'infusion (24) est ajustée et la puissance de la pompe destinée à acheminer l'eau chaude dirigée dans la chambre d'infusion (24) afin de réaliser le procédé d'infusion est commandée ou seule la puissance de la pompe destinée à acheminer l'eau chaude dirigée dans la chambre d'infusion (24) afin de réaliser le procédé d'infusion est commandée.

2. Procédé selon la revendication 1, **caractérisé en ce que**, pour conserver un arôme homogène d'une boisson à base de café alors que les volumes de liquide distribués varient, une quantité plus importante de café moulu est introduite dans la chambre d'infusion (24) quand le volume distribué est plus important, le volume de la chambre d'infusion (24) est ajusté pour être relativement plus grand par rapport à celui rempli d'une quantité de café moulu plus faible et la puissance de la pompe pour acheminer une quantité d'eau chaude plus importante est augmentée.

3. Procédé selon la revendication 1, **caractérisé en ce que**, pour ajuster la taille de la chambre d'infusion (24), la pression de retour mise à disposition lors de la formation de la chambre d'infusion (24) grâce au déplacement adéquat des éléments relativement mobiles les uns par rapport aux autres de l'unité d'infusion (1) de la machine à café (K) par le café moulu introduit dans le cylindre d'infusion (6) et éventuellement compacté dans le cadre de la formation de la chambre d'infusion (24), est utilisée en guise de mesure.

4. Procédé selon la revendication 3, **caractérisé en ce que**, pour ajuster la taille relativement plus grande de la chambre d'infusion (24) lors de l'utilisation d'une quantité de café moulu plus grande introduite dans le cylindre d'infusion (6), une pression de retour plus faible, mise à disposition par le café moulu se trouvant dans la chambre d'infusion (24), est utilisée en guise de mesure pour une chambre d'infusion (24) relativement plus grande.

5. Procédé selon l'une des revendications 2 à 4, **caractérisé en ce que** la puissance de la pompe est augmentée dans une telle mesure que le volume plus important de liquide est acheminé dans le même temps que le volume moindre de liquide lors de la distribution de la même boisson à base de café avec un volume moindre.

6. Machine à café avec une unité d'infusion (1) comportant un piston (7) disposé à l'intérieur d'un cylindre d'infusion (6) déplaçable en translation longitudinale et mobile par rapport à un châssis (2) avec une sortie d'eau chaude (11) afin d'acheminer de l'eau chaude dans une chambre d'infusion (24) formée par le cylindre d'infusion (6), le piston (7) mobile et un autre piston (3), avec un entraînement (15) pour mettre en mouvement l'un au moins des éléments mobiles de l'unité d'infusion (1) ainsi qu'avec une pompe (13) pour acheminer dans la chambre d'infusion (24) de l'eau chaude introduite dans le cadre du procédé d'infusion, **caractérisée en ce que** la taille de la chambre d'infusion (24) est ajustable en fonction de la boisson souhaitée, du volume de liquide souhaité pour la boisson à base de café distribuée, et de la quantité de café introduite dans la chambre d'infusion (24) et la puissance de la pompe destinée à acheminer l'eau chaude dirigée dans la chambre d'infusion (24) afin de réaliser le procédé d'infusion est commandée ou seule la puissance de la pompe destinée à acheminer l'eau chaude dirigée dans la chambre d'infusion (24) afin de réaliser le procédé d'infusion est commandée.
